# EUROPEAN PATENT SPECIFICATION

(11) **EP 1 470 342 B1**
(45) Date of publication and mention of the grant of the patent: **02.08.2006**
(21) Application number: 03700413.2
(22) Date of filing: 27.01.2003
(51) Int. Cl.: F16C 1/02

(54) **DEVICE FOR THE TRANSMISSION OF ROTATIONAL FORCES**
VORRICHTUNG ZUM ÜBERTRAGEN VON DREHKRÄFTEN
DISPOSITIF POUR LA TRANSMISSION DE FORCES DE ROTATION

(30) Priority: 30.01.2002 DE 10203635
(43) Date of publication of application: 27.10.2004
(73) Proprietor: Valeo Klimasysteme GmbH, 96476 Rodach (DE)
(72) Inventor: SUCK, Wolfgang, 96450 Coburg (DE)
(74) Representative: Léveillé, Christophe
(86) International application number: PCT/IB2003/000208
(87) International publication number: WO 2003/064870

(56) References cited:
- US-A- 3 250 088
- US-A- 4 388 840
- US-A- 5 013 282

## Description

The present invention relates, in general terms, to a device for the transmission of rotational forces, in particular a shaft in a heating, ventilation and/or air-conditioning system of a motor vehicle, as described by the preamble of the independent patent claim 1.

Devices for the transmission of rotational forces, in particular shafts, are sufficiently known in the prior art, in particular from document US-A-3 250 088. A shaft conventionally comprises a drive means and an output means. For example, the drive means is in engagement with a motor and the output means is in engagement with a gear unit for the actuation of various air flaps. So that, in this case, fault-free operation can be ensured, only low tolerances are available both in the manufacture and for the mounting of such shafts. In particular, the tolerances in the axial direction of the shaft are critical, since continuous engagement of the respective means which are in interaction with one another must be ensured. A further disadvantage is that it is not possible, in practice, to adapt the distances between the respective drive means and output means at the mounting location during the mounting operation.

The object of the present invention is, therefore, to develop a known device for the transmission of rotational forces, in particular a shaft, in such a way that production with higher axial tolerances and, at the same time, adaptation to the respective mounting location during the mounting operation are possible, without the intended use at the same time being impaired.

This object is achieved by means of the characterizing features of the independent patent claim 1, expedient developments being described by means of the features of the dependent claims.

Since the output means and/or the drive means are/is arranged axially displaceably on the shaft, there is the possibility of adapting the respective axial distances between the means at the respective mounting location during the mounting operation. Consequently, the axial tolerances of the shaft can be increased and the latter can therefore be produced in a simple and cost-effective way. Furthermore, a shorter mounting time of the device according to the invention is obtained, since the means can be brought more quickly into optimum engagement with associated counterelements.

In particular, it is advantageous that the shaft has a stiffening region. As a result, regions of the shaft in which higher mechanical stresses are expected can advantageously be reinforced against these.

Moreover, it is advantageous that the stiffening region is arranged essentially in a form-fitting manner on the shaft. This is a particularly simple possibility for ensuring an essentially play-free transmission of the rotational forces.

In a preferred embodiment, the shaft, in particular the stiffening region, has at least one latching region. As a result, the shaft can be brought into interaction with a further component, such as, for example, with a drive and/or output means, in that an appropriate counterpiece is provided on the corresponding means.

Advantageously, the axially displaceable means has a perforation which has essentially the same cross section as the shaft or the stiffening region in the installation position. This affords the possibility of arranging the axially displaceable means essentially in a form-fitting manner on the shaft or on the stiffening region. A form-fitting connection of these components is a simple possibility for transmitting the forces acting on the shaft to the corresponding means. In this case, it is also possible to cause part of the shaft to project from the axially displaceable means, so that shortening is not necessary. Mounting can thus be simplified even further.

The axially displaceable means may have at least one latching tongue which can be brought into essentially rotationally fixed engagement with the latching region. Necessary axial securing in a mounting position is thereby possible.

Advantageously, the axially displaceable means can be pushed onto the latching region, in particular onto the stiffening region, in the axial direction. This results in simple and rapid mounting of the means according to the invention.

Furthermore, it is advantageous that the axially displaceable means latches with the latching region at least in an intended position, said means latching in such a way that further displacement is inhibited in at least one axial direction. By latching in one position, continuous actuation of the devices which are in engagement can be ensured, since the forces which are to be applied for displacement out of the intended mounting position are not exceeded by the operating forces.

In a preferred embodiment, the shaft is a flexible shaft. By a flexible shaft being used, radial displaceability making it easier to adapt to the respective mounting location can also be achieved.

In a further preferred embodiment, the axially displaceable means comprises a pinion, in particular a conical gearwheel. The use of a pinion is a particularly simple possibility for transmitting rotational movements to adjacent devices.

Further features and advantages of the invention will become clearer from reading the following merely exemplary and not restrictive description referring to the accompanying drawings in which:
- figure 1: shows a sectional illustration of a preferred embodiment of a device according to the invention,
- figure 2: shows a perspective illustration of the device from figure 1,
- figure 3: shows a sectional illustration of the device from figure 1 in an exemplary form of installation.

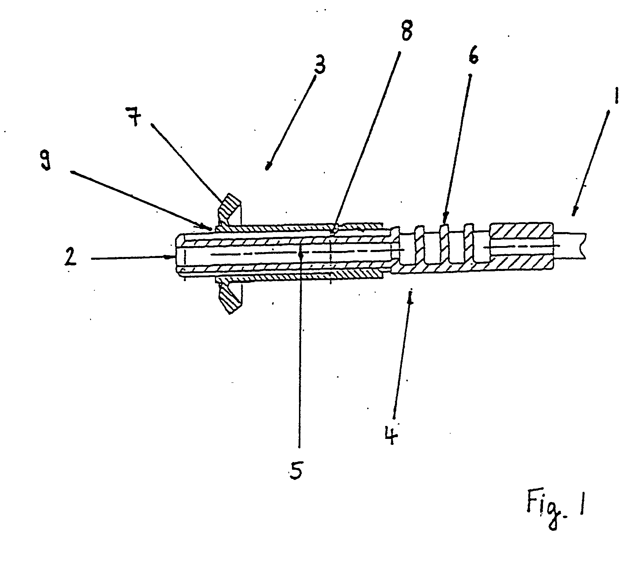

Figure 1 shows in section part of a preferred embodiment of a device according to the invention. In the preferred embodiment, the shaft is a flexible shaft 1. Starting from one end face 2, an output means 3 and a stiffening region 4 are arranged on the shaft 1. Furthermore, a drive means is arranged on that region of the shaft 1 which is not illustrated in figure 1.

The stiffening region 4 is divided, starting from the end face 2, into an approximately 35 mm long latching region 5 and into a fixing region 6 which is arranged essentially in a form-fitting manner on the shaft 1.

The output means 3 comprises a pinion 7 and a latching tongue 8. The output means 3 has a perforation 9 which has essentially the same cross section as the latching region 5.

During the mounting of the output means 3, the latter is pushed, starting from the end face 2, onto the stiffening region 4 in the axial direction, until the latching tongue 8 and the latching region 5 are in the desired engagement. The latching tongue 8 and the latching region 5 are in this case in engagement such that the output means 3 cannot be detached from the shaft 1 by means of operating forces.

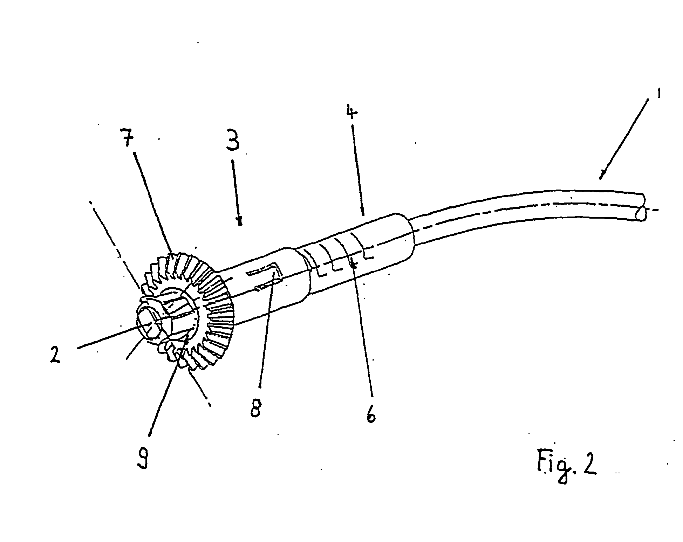

Figure 2 shows a perspective illustration of the portion of the means according to the invention from figure 1. Identical parts are characterized by the same reference symbols.

In this illustration, it can be seen particularly clearly how the output means 3 is pushed onto the stiffening region 4 into the position illustrated, so that the perforation 9 is in engagement essentially in a form-fitting manner and, above all, with the latching tongue 8 and with the latching region 5.

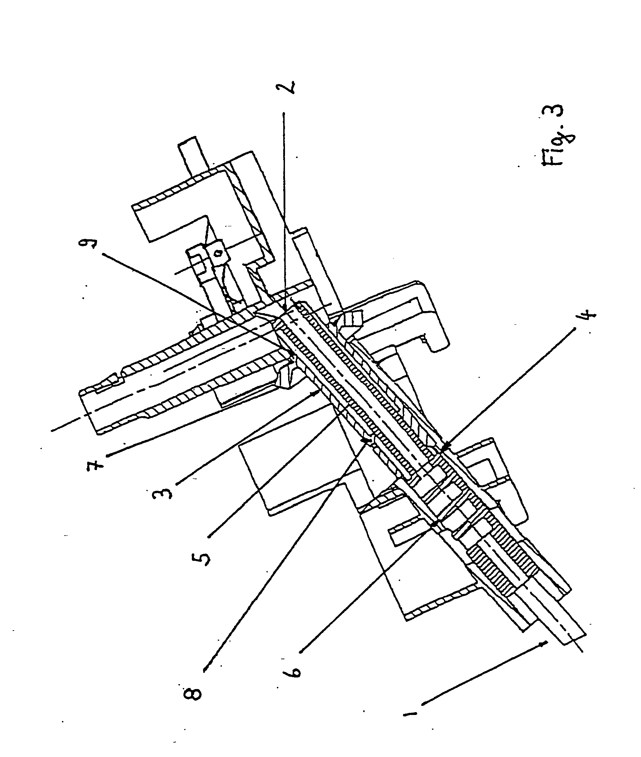

Figure 3 shows the device from figure 1 in an exemplary use. Identical parts are again characterized by the same reference symbols.

In this illustration, it can be seen particularly clearly how the device is in engagement with a corresponding unit, for example a gear unit.

Although the present invention was fully described above with reference to an embodiment preferred at the present time, a person skilled in the art should recognize that various modification possibilities are possible within the scope of the accompanying claims, without departing from the concept according to the invention and from the protection claimed.

## Claims

1. A device for the transmission of rotational forces, in particular for a heating, ventilation and/or air-conditioning system of a motor vehicle, comprising a flexible shaft (1), an output means (3) and a stiffening region (4) arranged on one end region of the shaft, a drive means being arranged on another end of the shaft (1) **characterized in that** the stiffening region (4) is divided into a latching region (5) and into a fixing region (6), the latest being arranged essentially in a form-fitting manner on the shaft (1), the output means (3) comprises a latching tongue (8) and the output means (3) and/or the drive means are/is arranged axially displaceable on the shaft (1).

2. The device as claimed in claim 1, **characterized in that** the axially displaceable means (3) has a perforation (9) which has essentially the same cross section as the shaft (1) or the stiffening region (4) in the installation position.

3. The device as claimed in one of claims 1 to 2, **characterized in that** the axially displaceable means (3) has at least one latching tongue (8) which can be brought into essentially rotationally fixed engagement with the latching region (5).

4. The device as claimed in one of claims 1 to 3, **characterized in that** the axially displaceable means (3) can be pushed onto the latching region (5), in particular onto the stiffening region (4), in the axial direction.

5. The device as claimed in one of claims 1 to 4, **characterized in that** the axially displaceable means (3) latches with the latching region (5) at least in an intended position, said means latching in such a way that further displacement is inhibited in at least one axial direction.

6. The device as claimed in one of claims 1 to 5, **characterized in that** the axially displaceable means (3) comprises a pinion (7), in particular a conical gearwheel.

## Patentansprüche

1. Vorrichtung für die Übertragung von Rotationskräften, insbesondere für ein Heizungs-, Ventilations- und/oder Klimasystem eines Motorfahrzeugs, umfassend eine Biegewelle (1), ein Ausgabemittel (3) und einen an einem Endbereich der Welle angeordneten versteifungsbereich (4), wobei ein Antriebsmittel an einem anderen Ende der Welle (1) angeordnet ist, **dadurch gekennzeichnet, dass** der versteifungsbereich (4) in einen Einrastbereich (5) und in einen Befestigungsbereich (6) geteilt ist, wobei Letzterer im Wesentlichen in einer der Form entsprechenden Weise auf der Welle (1) angeordnet ist, das Ausgabemittel (3) eine Einrastzunge (8) umfasst und das Ausgabemittel (3) und/oder das Antriebsmittel auf der welle (1) axial verschiebbar angeordnet sind/ist.

2. Vorrichtung nach Anspruch 1, **dadurch gekennzeichnet, dass** das axial verschiebbare Mittel (3) eine Lochung (9) besitzt, die im wesentlichen den gleichen Querschnitt wie die Welle (1) oder der versteifungsbereich (4) in der Montageposition aufweist.

3. Vorrichtung nach einem der Ansprüche 1 bis 2, **dadurch gekennzeichnet, dass** das axial verschiebbare Mittel (3) zumindest eine Einrastzunge (8) besitzt, welche mit dem Einrastbereich (5) in wesentlichen drehfest in Eingriff gebracht werden kann.

4. Vorrichtung nach einem der Ansprüche 1 bis 3, **dadurch gekennzeichnet, dass** das axial verschiebbare Mittel (3) auf den Einrastbereich (5), insbesondere auf den versteifungsbereich (4) in der axialen Richtung geschoben werden kann.

5. Vorrichtung nach einem der Ansprüche 1 bis 4, **dadurch gekennzeichnet, dass** das axial verschiebbare Mittel (3) in den Einrastbereich (5) zumindest in einer beabsichtigten Position einrastet, wobei das besagte Mittel so einrastet, dass ein weiteres Verschieben in zumindest eine axiale Richtung verhindert wird.

6. Vorrichtung nach einem der Ansprüche 1 bis 5, **dadurch gekennzeichnet, dass** das axial verschiebbare Mittel (3) ein Ritzel (7), insbesondere ein konisches Zahnrad umfasst.

## Revendications

1. Dispositif pour la transmission de forces de rotation, en particulier pour un système de chauffage, de ventilation et/ou de climatisation d'un véhicule motorisé, comprenant un arbre flexible (1), un moyen de sortie (3) et une région de raidissement (4) agencée sur une région d'extrémité de l'arbre, un moyen d'entraînement étant agencé sur l'autre extrémité de l'arbre (1), **caractérisé en ce que** la région de raidissement (4) est divisée en une région de verrouillage (5) et en une région de fixation (6), cette dernière étant agencée essentiellement de manière ajustée sur l'arbre (1), le moyen de sortie (3) comprenant une languette de verrouillage (8) et le moyen de sortie (3) et/ou le moyen d'entraînement étant agencé(s) de manière à pouvoir se déplacer axialement sur l'arbre (1).

2. Dispositif selon la revendication 1, **caractérisé en ce que** le moyen (3) pouvant se déplacer axialement comporte une perforation (9) qui présente essentiellement la même section transversale que l'arbre (1) ou que la région de raidissement (4) dans la position d'installation.

3. Dispositif selon l'une quelconque des revendications 1 à 2, **caractérisé en ce que** le moyen (3) pouvant se déplacer axialement comporte au moins une languette de verrouillage (8) qui peut être mise en prise de manière fixe et essentiellement rotative avec la région de verrouillage (5).

4. Dispositif selon l'une quelconque des revendications 1 à 3, **caractérisé en ce que** le moyen (3) pouvant se déplacer axialement peut être poussé sur la région de verrouillage (5), en particulier sur la région de raidissement (4), dans la direction axiale.

5. Dispositif selon l'une quelconque des revendications 1 à 4, **caractérisé en ce que** le moyen (3) pouvant se déplacer axialement se verrouille avec la région de verrouillage (5) au moins dans une position souhaitée, ledit moyen se verrouillant de telle sorte que tout autre déplacement soit empêché dans au moins une direction axiale.

6. Dispositif selon l'une quelconque des revendications 1 à 5, **caractérisé en ce que** le moyen (3) pouvant se déplacer axialement comprend un pignon (7), en particulier une roue dentée conique.
